# EUROPEAN PATENT APPLICATION

(11) **EP 2 184 927 A1**
(43) Date of publication of application: **12.05.2010**
(21) Application number: 07768283.9
(22) Date of filing: 06.07.2007
(51) Int. Cl.: H04Q 1/00

(54) **INFORMATION COLLECTION SYSTEM, INFORMATION REGISTRATION SERVER, INFORMATION COLLECTION METHOD, AND MOBILE TERMINAL DEVICE**

(71) Applicant: Navitime Japan Co., Ltd., Tokyo 107-0062 (JP)
(72) Inventor: KIKUCHI, Shin, Minato-ku Tokyo 107-0062 (JP)
(74) Representative: HOFFMANN EITLE
(86) International application number: PCT/JP2007/063551
(87) International publication number: WO 2009/008035

(57) **Abstract**

A public wireless LAN accessible area collection system includes a mobile terminal device having GPS means, wireless LAN communication means, and data communication means and a server which has storage means and accessible area map generation means and performs data communication with the mobile terminal device. When the wireless LAN communication means recognizes that the mobile terminal device exists in the area in which the mobile terminal device can be connected to the public wireless LAN, it obtains access information in the area. The data communication means transmits location information and access information to the server. The server associates the location information with the access information that are received from the mobile terminal device and stores them in the storage means. The accessible area map generation means applies the location information about the area in which the mobile terminal device can be connected to the public wireless LAN to the map data according to the location information stored in the storage means.

## Description

### TECHNICAL FIELD

The present invention relates to a system for collecting and databasing information of a public wireless LAN access point, and more specifically relates to an information collection system for using a mobile terminal device to collect and database accessible area information of a public wireless LAN, and to an information registration server, information collection method, and mobile terminal device.

### BACKGROUND ART

As public wireless LAN has become widespread, public wireless LAN access points are being increasingly provided to stores and facilities in various locations. In order for a user to find out where these public wireless LAN access points are located, the user must browse an Internet website for searching for public wireless LAN access points, or browse the website of a provider that lists the public wireless LAN access points.

Patent Reference 1 (Japanese Laid-open Patent Publication No. 2003-302232) discloses a vehicle-mounted navigation device in which a display is provided on a display screen so that a user can distinguish between an access point facility that is equipped with a wireless LAN device and a facility that is not so equipped, the broadcast access range of the facility provided with a wireless LAN device is displayed, and, when the user's vehicle is within the access range, the user is so notified, direct communication with the facility is performed, and necessary information is obtained.

In order for an access point facility that is equipped with a wireless LAN device to be displayed on a map, coordinates indicating the location of the facility; a facility classification code whereby the facility is classified according to the type of business, such as restaurant, gas station, or the like, or according to a specific company name; facility name data; an ID of the wireless LAN; and data relating to the wireless access distance are collected in a database of the vehicle-mounted navigation device described in Patent Reference 1. Coordinates of the facility data are converted to a display coordinate system in a computing processor and displayed as an icon. Furthermore, when the wireless access distance is included in the facility data, the wireless access distance is converted to the display coordinate system, and the wireless access distance is displayed as a dotted line or the like centered around the facility data location. Through this configuration, a user can distinguish between a facility that has a wireless LAN device and a facility that does not have a wireless LAN device, and can recognize whether the vehicle location is within the broadcast access range.
[Patent Reference 1] Japanese Laid-open Patent Publication No. 2003-302232 ([Abstract], paragraphs [0011], [0012])

### DISCLOSURE OF THE INVENTION

### [Problems the Invention Is Intended To Solve]

A database of facilities as access points that are provided with wireless LAN devices is necessary in order to implement a navigation device such as the one disclosed in Patent Reference 1.

Access point information has conventionally been provided by each provider that provides wireless LAN service. Consequently, it is difficult to collect and database the information of all access points without regard to the provider. There is a desire on the part of users to search for area information of wireless LAN access points and verify the information on a map. When an access point is secured and login is not possible, there is conventionally no utility value, but if the access point can be utilized to obtain location information, a location can then be known using a terminal device that does not possess a locating means, and the terminal device has utility value.

As a result of various investigations aimed at overcoming the aforementioned problems, the inventors developed the present invention upon discovering that in a case in which a mobile telephone obtains wireless LAN access information through the use of wireless LAN communication means, the mobile telephone being provided with location information obtaining means, wireless LAN communication means, and data communication means, information of an access point of the wireless LAN can easily be collected by a process in which the location is detected by the location information obtaining means, the location information and access information of the wireless LAN are transmitted to a server by the data communication means, and a database is created.

Specifically, an object of the present invention is to provide a system for collecting and easily databasing a wide range of information of areas in which a public wireless LAN can be accessed without regard to the provider or the like.

### [Means for Solving the Abovementioned Problems]

The invention according to a first aspect for overcoming the abovementioned problems is an information collection system comprising a mobile terminal device having location information obtaining means for obtaining location information of a mobile terminal device, and data communication means for transmitting various types of obtained information to an information registration server; and an information registration server provided with storage means for storing various types of information received from the mobile terminal device; and the information collection system is **characterized in that** the mobile terminal device comprises wireless LAN communication means for accessing a wireless LAN and obtaining access information of the wireless LAN; the data communication means transmits location information of the time at which the wireless LAN was accessed that is obtained by the location information obtaining means, and access information obtained by the wireless LAN communication means to the information registration server; and the information registration server associates and stores in the storage means the access information and the location information received from the mobile terminal device.

The invention according to a second aspect is the information collection system according to the first aspect, **characterized in that** the access information is an SSID (Service Set Identifier) of an access point of the wireless LAN.

The invention according to a third aspect is the information collection system according to the first aspect, **characterized in that** the access information is a MAC address (Media Access Control Address) of an access point of the wireless LAN.

The invention according to a fourth aspect is the information collection system according to the first aspect,
**characterized in that** the information registration server comprises accessible area map generation means; and the accessible area map generation means causes location information of an area in which connection to the wireless LAN is possible to be reflected in map data on the basis of the location information and access information stored in the storage means.

The invention according to a fifth aspect is the information collection system according to the fourth aspect, **characterized in that** the access information includes communication protocol information, and the accessible area map generation means changes the manner of reflection in the map data according to the type of the communication protocol.

The invention according to a sixth aspect is the information collection system according to the fourth aspect, **characterized in that** the access information includes reception quality information, and the accessible area map generation means changes the manner of reflection in the map data according to the reception quality.

The invention according to a seventh aspect is the information collection system according to the fourth aspect, **characterized in that** the access information includes inherent information of an access point in an area to which the wireless LAN can be connected, and the accessible area map generation means causes an area to which the wireless LAN can be connected that has the same inherent information to be reflected in the map data as belonging to the same area.

The invention according to an eighth aspect is the information collection system according to any of the first through seventh aspects, **characterized in that** the information registration server deletes already-stored access information when access information having the same location information as access information already stored in the storage means is not received from the mobile terminal device within a predetermined period of time.

The invention according to a ninth aspect is the information collection system according to any of the first through seventh aspects, **characterized in that** when information of a plurality of locations is associated with the same access information stored in the storage means, the information registration server computes representative location information from the plurality of location information and stores the representative location information in the storage means.

The invention according to a tenth aspect is the information collection system according to the first aspect, **characterized in that** the information registration server comprises location identification means, and when a query including the access information is received, the location identification means recalls location information associated with the access information from the storage means and responds.

The invention according to an eleventh aspect is the information collection system according to the tenth aspect, **characterized in that** when information of a plurality of locations is associated with the access information, the location identification means computes representative location information from the plurality of location information and responds.

The invention according to a twelfth aspect is an information registration server comprising storage means for storing various types of information received from a mobile terminal device having location information obtaining means for obtaining location information of a mobile terminal device, wireless LAN communication means for accessing a wireless LAN and obtaining access information of the wireless LAN, and data communication means for transmitting various types of obtained information to an information registration server; and the information registration server is **characterized in that** location information of the time the wireless LAN was accessed that is obtained by the location information obtaining means and transmitted by the data communication means is associated with access information obtained by the wireless LAN communication means and stored in the storage means by the information registration server.

The invention according to a thirteenth aspect is the invention according to the twelfth aspect, being an information registration server comprising storage means for storing various types of information received from a mobile terminal device having location information obtaining means for obtaining location information of a mobile terminal device, wireless LAN communication means for accessing a wireless LAN and obtaining access information of the wireless LAN, and data communication means for transmitting various types of obtained information to an information registration server; and the information registration server is **characterized in that** location information of the time the wireless LAN was accessed that is obtained by the location information obtaining means and transmitted by the data communication means is associated with access information obtained by the wireless LAN communication means and stored in the storage means by the information registration server.

The invention according to a fourteenth aspect is the invention according to the twelfth or thirteenth aspect, **characterized in that** the information registration server comprises location identification means, and when a query including the access information is received, the location identification means recalls location information associated with the access information from the storage means and responds.

The invention according to a fifteenth aspect is an information collection method in an information collection system that comprises a mobile terminal device having location information obtaining means for obtaining location information of a mobile terminal device, and data communication means for transmitting various types of obtained information to an information registration server; and an information registration server provided with storage means for storing various types of information received from the mobile terminal device; and the information collection method is **characterized in that** the mobile terminal device comprises wireless LAN communication means for accessing a wireless LAN and obtaining access information of the wireless LAN; and the information collection method comprises a first step of the data communication means transmitting location information of the time at which the wireless LAN was accessed that is obtained by the location information obtaining means, and access information obtained by the wireless LAN communication means to the information registration server; and a second step of the information registration server associating and storing in the storage means the access information and the location information received from the mobile terminal device.

The invention according to a sixteenth aspect is the invention according to the fifteenth aspect, characterized in comprising a third step of the information registration server computing representative location information from the plurality of location information and storing the representative location information in the storage means when information of a plurality of locations is associated with the same access information stored in the storage means.

The invention according to a seventeenth aspect is the invention according to the fifteenth or sixteenth aspect, **characterized in that** the information registration server comprises location identification means, and the information collection method has a fifth step of the location identification means recalling location information associated with the access information from the storage means and responding when a query including the access information is received.

The invention according to an eighteenth aspect is a mobile terminal device comprising location information obtaining means for obtaining location information of a mobile terminal device, and data communication means for transmitting various types of obtained information to an information registration server; and the mobile terminal device is **characterized in that** the mobile terminal device comprises wireless LAN communication means for accessing a wireless LAN and obtaining access information of the wireless LAN; and the data communication means transmits to the information registration server so that location information of the time the wireless LAN was accessed that is obtained by the location information obtaining means, and access information obtained by the wireless LAN communication means can be associated and stored in the information registration server.

### [Effect of the Invention]

In the invention according to the first aspect, the wireless LAN is accessed by the wireless LAN communication means of the mobile terminal device and access information is obtained, the location of the mobile terminal device is identified by the location information obtaining means, and the access information and location information are transmitted to the server using the data communication means. In the server, the access information and the location information received from the mobile terminal device are associated with each other and stored in the storage means. A database in which information of locations at which the wireless LAN can be connected to and access information thereof are correlated is thereby constructed without regard to provided, and can be provided as information that can actually be used. For example, when a query for information of locations at which the wireless LAN can be connected to is made from a terminal that is connected to the server by a network, it is possible to provide a list of places at which the wireless LAN can be connected to. Since the present invention is configured so that accessible location information and access information thereof are collected from a mobile terminal device in the possession of a user, it is possible to generate a detailed database in a region in which there are numerous users of mobile terminal devices.

In the invention according to the second aspect, the access information is an SSID (service set identifier) of an access point in an area to which the wireless LAN can be connected. Since the same SSID is not used more than once in a predetermined area, a corresponding location can easily be identified from the SSID. An SSID can also be read even when a wireless LAN is secured, and an SSID is therefore effective in a location identification query.

In the invention according to the third aspect, the access information is a MAC address (media access control address) of an access point in an area to which the wireless LAN can be connected. A MAC address is assigned to the hardware of an access point, and is therefore inherent information, and a corresponding location can easily be identified from a MAC address. A MAC address can also be read even when a wireless LAN is secured, and a MAC address is therefore effective in a location identification query.

In the invention according to the fourth aspect, since the server is provided with accessible area map generation means, a map of areas in which the wireless LAN can be connected to can be created based on the access information and location information stored in the storage means, and the access information can also be reflected in the map. The accessible area map can be delivered to a terminal that is connected to the server by a network.
In the invention according to the fifth aspect, the accessible area map is generated so that the manner of reflection in the map data varies according to the type of communication protocol. Examples of types of communication protocols include IEEE802.11b/a/g/n, and the like. Varying the manner of display in the map for each type of communication protocol makes it possible to provide an accessible area map whereby a user can clearly distinguish which locations are locations in which it is possible to connect to the wireless LAN by a communication protocol usable by the user's terminal.
In the invention according to the sixth aspect, the accessible area map is created so that the manner of reflection in the map data varies according to the wireless LAN reception quality. For example, an image in which a wide range is covered is displayed when the wireless LAN reception quality is high, and an image in which a narrow range is covered is displayed when the wireless LAN reception quality is low. It is thereby possible to provide an accessible area map whereby a user can clearly distinguish whether a location is one in which it is possible to more easily connect to the wireless LAN.
In the invention according to the seventh aspect, the accessible area map is created so that areas having the same inherent information belong to the same area. The term "inherent information" refers to the SSID (service set identifier) of an access point in the wireless LAN, for example. It is thereby possible to provide an accessible area map in which areas that belong to the same inherent information are displayed as a single area.
In the invention according to the eighth aspect, the server can perform data maintenance of the information of an area to which the wireless LAN can be connected. In other words, when access information having the same location information as access information already stored in the server is not received within a predetermined period of time, since there is a significant possibility that an access point of the area has become unusable, such an operation as deleting the access information from the database is performed, and the deletion is reflected in the database. It is thereby possible to provide the latest, always usable information of areas in which it is possible to connect to the wireless LAN.
In the invention according to the ninth aspect, when the server receives information of a plurality of locations for a single item of access information, the server computes a representative location and stores the representative location in the storage means. The representative location may be the weighted center, for example, of a plurality of locations.
In the invention according to the tenth aspect, the server is provided with location identification means, and when the server receives a query that includes access information, the server searches the access information stored in the storage means, recalls the location information that is associated with the access information, and responds. When the access information of the wireless LAN can be obtained even by a mobile terminal device that does not have a GPS or other location information obtaining means, this obtained access information can be used as a basis for querying the server to identify the location of the mobile terminal device. Since a wireless LAN has a relatively small accessible range, and is suitable for identifying a location, using the system described above, the database stored in the server can be used to identify a location.
In the invention according to the eleventh aspect, when the server collects information of a plurality of locations for a single item of access information, and there is a location query using access information, the server can compute a representative location and respond. The representative location may be the weighted center, for example, of a plurality of locations. The representative location may also be computed and stored when the location information is stored. It is thereby possible to respond to the location query with an area that is highly likely to currently belong.
In the invention according to the twelfth through fourteenth aspects, there can be provided an information registration server that constitutes the information collection system of the invention according to each of the first, seventh, and eighth aspects.
In the invention according to the fifteenth through seventeenth aspects, an information collection method can be provided for implementing the information collection system of the invention according to each of the first, seventh, and eighth aspects.
In the invention according to the eighteenth aspect, a mobile terminal device can be provided that constitutes the information collection system of the invention according to the first aspect.

### BRIEF DESCRIPTION OF THE DRAWINGS

FIG. 1 is a schematic view showing the entire public wireless LAN accessible area collection system according to the present embodiment;
FIG. 2 is a block diagram showing the public wireless LAN accessible area collection system according to the present embodiment;
FIG. 3 is an operational flowchart for the mobile telephone of the public wireless LAN accessible area collection system according to the present embodiment;
FIG. 4 is an operational flowchart for the server of the public wireless LAN accessible area collection system according to the present embodiment;
FIG. 5 is a view showing an example of the contents of the access point DB 31 in the public wireless LAN accessible area collection system according to the present embodiment;
FIG. 6 is a view showing an example of the accessible area map generated in the public wireless LAN accessible area collection system according to the present embodiment; and
FIG. 7 is an operational flowchart of location identification in the server of the public wireless LAN accessible area collection system according to the present embodiment.

### [Key to Symbols]

- 10: mobile telephone
- 12: GPS means
- 13: wireless LAN communication means
- 14: access information obtaining means
- 17: data communication means
- 20: server
- 23: data communication means
- 24: access map generation means
- 25: location identification means
- 31: access point DB
- 32: map DB
- 50: public wireless LAN access point facility

### BEST MODE FOR CARRYING OUT THE INVENTION

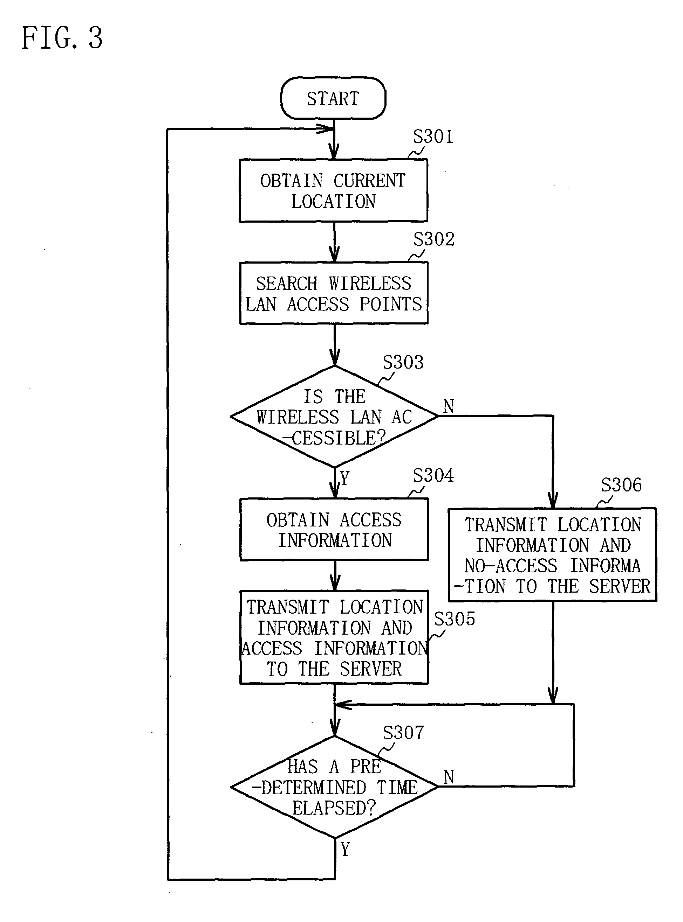

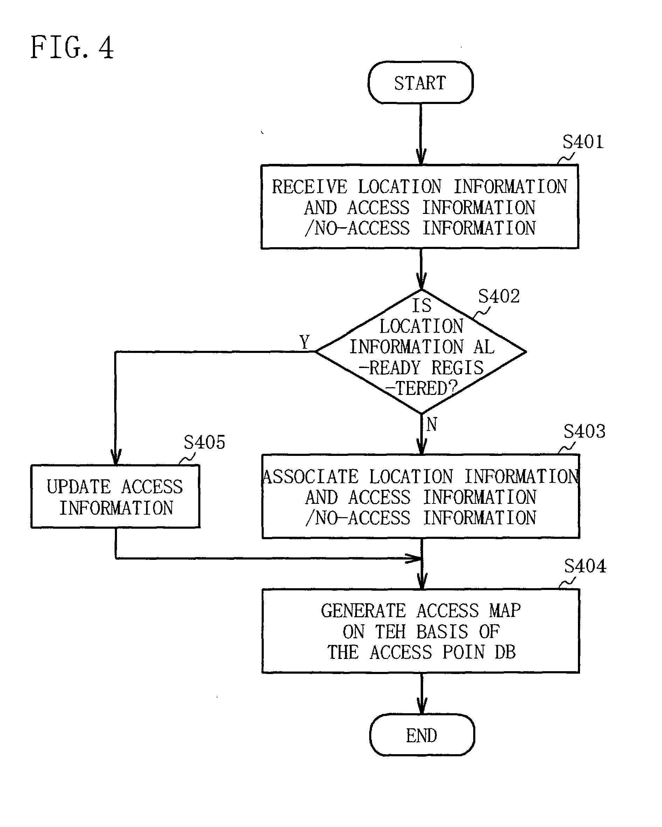

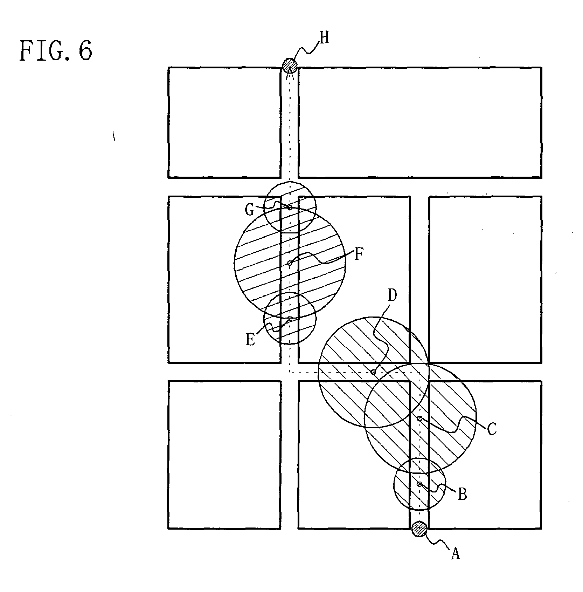

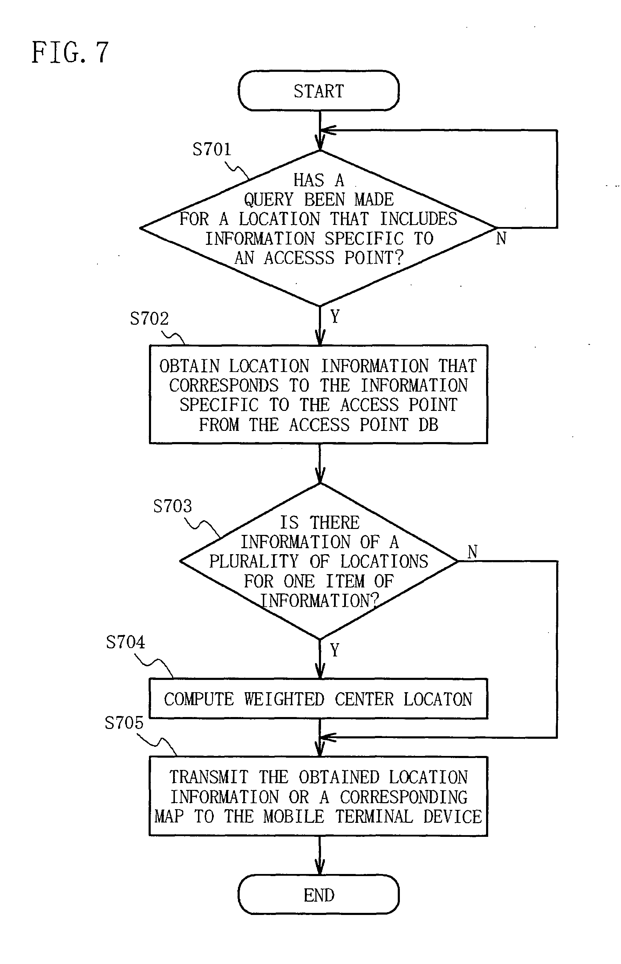

Specific examples of the present invention will be described in detail using embodiments and drawings.

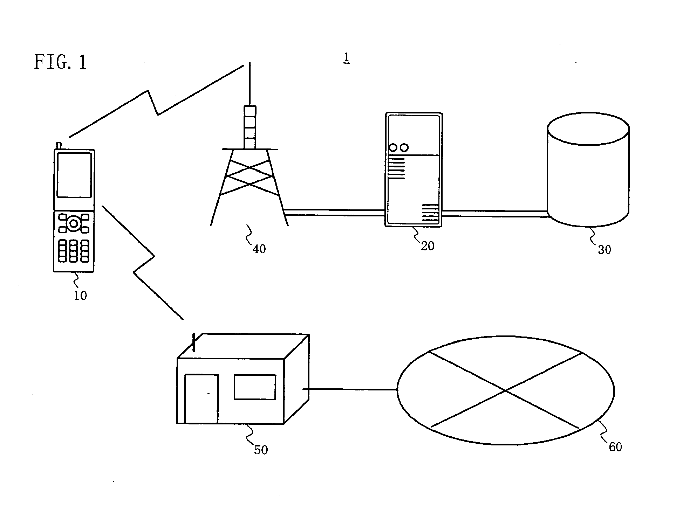

FIG. 1 is a schematic view showing the entire public wireless LAN accessible area collection system according to the present embodiment. As shown in FIG. 1, the public wireless LAN accessible area collection system 1 in the present embodiment is provided with a mobile telephone 10 in the possession of a user; connected to the mobile telephone 10 are a base station 40, a server 20 capable of packet communication or data communication with the mobile telephone 10 and connected via a public telephone line network not shown in the drawing, and a database 30 connected to or housed in the server 20; and a public wireless LAN access point facility 50 connected to a network 60 via the Internet or the like.
In the present embodiment, the server 20 receives access information of the public wireless LAN and location information transmitted from a plurality of mobile telephones 10, registers the information in the database 30, generates an access map on the basis of the data stored in the database 30, and transmits the access map to the mobile telephones 10 and other components.
The public wireless LAN access point facility 50 may be a railroad station, coffee shop, restaurant, or other facility, or a vending machine, telephone pole, or the like. In these facilities, a device referred to as an access point is installed for connecting a notebook computer, PDA (personal digital assistant), mobile telephone provided with wireless LAN capability, or the like wirelessly to a LAN network, and the wireless LAN can be used when a user comes within the wireless access range of the access point. An access point is usually installed for each provider.

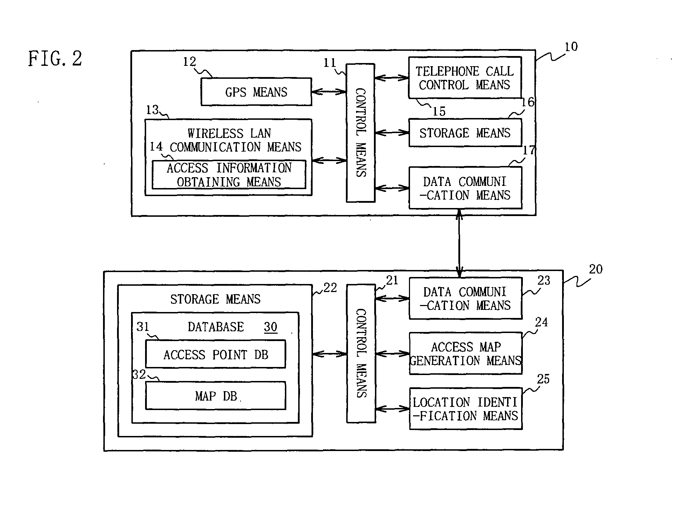

FIG. 2 is a block diagram showing the public wireless LAN accessible area collection system according to the present embodiment. The mobile telephone 10 is provided with a control means 11, a GPS means 12 as a location information obtaining means, a wireless LAN communication means 13, an access information obtaining means 14, a telephone call control means 15, a storage means 16, and a data communication means 17. The access information obtaining means 14 is included in the wireless LAN communication means 13, and is shown as constituting a portion of the function of the wireless LAN communication means 13.
The control means 11 controls the operation of the entire mobile telephone 10 and the components thereof, and is composed of a CPU, RAM, and ROM (not shown). The control means 11 actuates the functions of each component by executing a program stored in the RAM or ROM. The GPS means 12 receives a signal from a GPS satellite in orbit above the earth and computes the current location of the mobile telephone 10.
The wireless LAN communication means 13 converts data to be transmitted to the frequency of the wireless LAN and transmits the data, and also demodulates/converts data at the wireless LAN frequency that are to be received to enable the data to be used in the mobile telephone 10. The wireless LAN communication means 13 is further provided with access point search means, and notifies the control means 11 when the mobile telephone 10 is within the area in which communication by the wireless LAN is possible. The wireless LAN communication means 13 includes the access information obtaining means 14.
When the mobile telephone 10 is in the area in which communication by the wireless LAN is possible, the access information obtaining means 14 obtains an SSID (service set identifier) or MAC address (media access control address) as inherent information of the access point, and other important information such as the protocol type, channel, reception quality, and security status.
The telephone call control means 15 is a function for performing telephone calls as the primary function of the mobile telephone 10, and includes a microphone, speaker, codec, modulation demodulation circuit, call control function, and other components, but no description thereof will be given in the present embodiment.
The storage means 16 temporarily stores the location information obtained in the GPS means 12 and the access information obtained in the access information obtaining means 14.
The data communication means 17 communicates with the server 20 by a packet communication scheme, line connection scheme, or other method other than wireless LAN using a mobile telephone line network, and transmits and receives data processed in the mobile telephone 10 or the server 20.
The server 20 is provided with a control means 21, a storage means 22, a data communication means 23, an access map generation means 24 as the accessible area map generation means in the present invention, and a location identification means 25. The control means 21 controls the operation of the entire server 20 and the components thereof, and is composed of a CPU, RAM, and ROM (not shown). The control means 21 actuates the functions of each component by executing a program stored in the RAM or ROM.
The storage means 22 is provided with the database 30, and the database 30 is provided with an access point DB 31 and a map DB 32. The database 30 may be retained in the server 20, or may be provided separately from the server 20 and connected via a network or the like. The access information and the location information received from the mobile telephone 10 are associated with each other and stored in the access point DB 31. Map images and other data are stored in the map DB 32. The map DB 32 may also be obtained from a separate location on the network to which the server 20 is connected.
The data communication means 23 communicates with the mobile telephone 10 by a packet communication scheme, line connection scheme, or other method other than wireless LAN using a mobile telephone line network, and transmits and receives data processed in the mobile telephone 10 or the server 20.
The access map generation means 24 causes the location information and access information stored in the access point DB 31 of the database 30 to be reflected in a map of a predetermined range in the map DB 32, and generates the accessible area map data of the wireless LAN. The location identification means 25 obtains the location information that corresponds to the access information by searching the access point DB 31 of the database 30 when a query for a location that includes the access information occurs from the mobile telephone 10.
The operation of the mobile telephone 10 of the public wireless LAN accessible area collection system 1 will next be described with reference to FIG. 3. FIG. 3 is an operational flowchart for the mobile telephone 10 of the public wireless LAN accessible area collection system 1.
In step S301, the mobile telephone 10 obtains the current location through the use of the GPS means 12. In locations in which the GPS means 12 cannot be used, the mobile telephone 10 may read a QR code in which location information is included, or obtain location information by infrared communication. The obtained location information is temporarily stored in the storage means 16.
In step S302, the mobile telephone 10 actuates the wireless LAN communication means 13 and performs a search for a wireless LAN access point. In step S303, a determination is made as to whether the mobile telephone 10 is in an area in which access to the public wireless LAN is possible, and when the area is one in which access to the public wireless LAN is possible, the access information obtaining means 14 in step S304 obtains the inherent information, protocol type, channel, reception quality, security status, and other access information of the access point, and temporarily stores the information in the storage means 16.
Then, in step S305, the location information and access information stored in the storage means 16 are transmitted to the server 20 after being converted to a packet communication scheme or other appropriate data format by the data communication means 17, and the process proceeds to step S307.
When a determination is made in step S303 that the mobile telephone 10 is not in an area in which the public wireless LAN can be accessed, the process proceeds to step S306, the location information and information indicating that access is not possible (hereinafter referred to as no-access information) are transmitted to the server 20, and the process proceeds to the routine of step S307. When the mobile telephone 10 is not in an area in which the public wireless LAN can be accessed, since the information to be stored in the server 20 is not obtained, the routine of step S306 can be omitted.
In step S307, a determination is made as to whether a predetermined time period, e.g., 5 to 10 seconds, has elapsed, and after the predetermined time period has elapsed, the process returns to step S301, and the processing described above is repeated. The operations in the mobile telephone 10 described above are performed by a standby application or the like of the mobile telephone, for example, so that accessible area information of the wireless LAN can be collected automatically when the user is not using the mobile telephone.
An example was described above in which the current location information and the access information are transmitted to the server each time current location information is obtained, but this configuration is not limiting, and a configuration may be adopted in which the current location information and access information are stored as history information in the storage means 16, and transmitted to the server 20 after a predetermined time has elapsed, or after a predetermined amount of data has accumulated. The data communication means 17 may also transmit data by a line connection scheme, as well as by a packet communication scheme.
The operation of the server 20 of the public wireless LAN accessible area collection system 1 will next be described with reference to FIG. 4. FIG. 4 is an operational flowchart for the server 20 of the public wireless LAN accessible area collection system 1.
In step S401, when location information and access information/no-access information are received from the mobile telephone 10, the server 20 determines in step S402 whether the location information is already registered in the access point DB 31 of the database 30. When the location information is not already registered, the location information and the access information/no-access information are associated and stored in the access point DB 31 of the database 30 in step S403.
When the location information is already registered in step S402, new access information/no-access information that corresponds to the location information is stored in the access point DB 31 of the database 30.

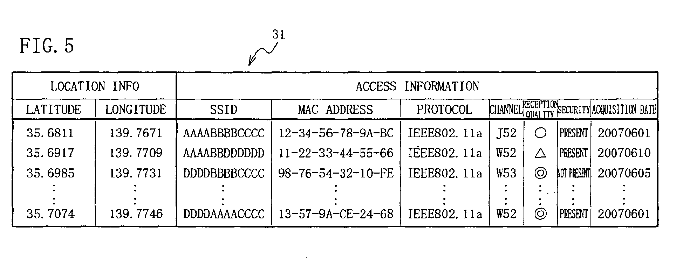

FIG. 5 is a view showing an example of the contents of the access point DB 31 generated at this time. As shown in FIG. 5, the access point DB 31 is composed of location information and access information that corresponds to the location information. The location information is composed of latitude and longitude, and the access information is composed of the SSID, MAC address, communication protocol, channel, reception quality, security, and acquisition date of the public wireless LAN access point facility 50. The SSID is an identifier for the access point in the wireless LAN, and is used to prevent interference in which a terminal device is able to communicate with a plurality of access points simultaneously, and so that only access points and terminal devices that have the same SSID are able to communicate.
In step S404 of FIG. 4, the access map generation means 24 generates an accessible area map by compiling map data stored in the map DB 32, on the basis of the access information obtained from the access point DB 31 of the database 30.
An example of the accessible area map is shown in FIG. 6. In FIG. 6, a user having the mobile telephone 10 departs from point A, moves upward in the drawing, turns left at the first intersection, then right at the next intersection, and continues walking straight ahead to point H. At each point B through G, the mobile telephone 10 detects that the wireless LAN is accessible, each item of location information and access information is associated and stored in the database 30 of the server 20, and the data are reflected in the map shown in FIG. 6.
In the present embodiment, the fact that a location is in an area where the wireless LAN is accessible is indicated by a circle. At points B through D, since the same SSID is detected, the areas are indicated by the same color (lines tilted downward to the right). Since the reception quality of the wireless LAN detected at point B is low, and the reception quality of the wireless LAN detected at points C and D is high, the circle at point B is small, and the circles at points C and D are large. It is thereby possible to indicate that the area surrounding a point of high reception quality has a wider range of accessibility of the wireless LAN.
A SSID different from that of points B through D is detected at points E through G, and points E through G are therefore indicated in a different color (lines tilted upward to the right). Since the reception quality at points E and G is lower than the reception quality at point F, the circles at points E and G are small, and the circle at point F is large.
Since the SSID is often associated with the name of the provider, indicating the SSID makes it possible to know which provider to subscribe to in a particular location.
An example is shown in FIG. 6 in which the method of displaying the indicator circle changes according to the SSID, but this configuration is not limiting, and the color of method of displaying the indicator circle may also be changed according to the type of communication protocol. When indicator circles that have later-dated data and indicator circles that have earlier-dated data are superposed, the indicator circles having newer data may be displayed on top of the indicator circles having older data, so that the indicator circles that have newer data are easier to see.
The server 20 monitors the acquisition date of access information of the access point DB 31 of the database 30, and deletes access information for which a predetermined time, e.g., one month or more, has elapsed from registration or updating of the data.
The method for identifying a location using the public wireless LAN accessible area collection system 1 will next be described with reference to FIG. 7. FIG. 7 is an operational flowchart for location identification in the server of the public wireless LAN accessible area collection system. In step S701 of FIG. 7, the server 20 determines whether a query has been made from a mobile terminal device (not shown) for a location that includes inherent information (access information) of an access point. An SSID or MAC address is included in the inherent information of the access point.
An SSID is an artificially set ID, but the same SSID is usually not set in a predetermined area, and an SSID is therefore information that is specific to an access point. A MAC address is allocated to each piece of access point hardware, and is therefore inherent information, and can be used to identify a location. These items of information can be read even when an access point is secured, and therefore can be obtained to identify a location.
When a location query has been made in step S701, the location identification means 25 of the server 20 obtains location information that corresponds to the inherent information of the access point from the access point DB 31 in step S702.
Then, in step S703, a determination is made as to whether information of a plurality of locations is associated with the inherent information of a single access point. When information of a plurality of locations is associated with the inherent information of a single access point, the location identification means 25 computes the weighted center location from the information of a plurality of locations, and the process proceeds to step S705.
When there is not information of a plurality of locations in step S703, i.e., when the information of only one location is associated with the inherent information of a single access point, the process proceeds to step S705. In step S705, the server 20 obtains map data of the obtained location information, or map data of a predetermined range on the basis of the obtained location information, from the map DB 32, and transmits the map data to the mobile terminal device.
An example was described above in which a weighted center location is computed each time a location query has been made when information of a plurality of locations is associated with the inherent information of a single access point, but this configuration is not limiting, and a configuration may be adopted in which a weighted center location is computed in advance, associated with access information, and stored in the access point DB 31 when information of a plurality of locations is associated with the inherent information of a single access point.
Through the configuration described above, it is possible to provide a system whereby information of areas in which a public wireless LAN is accessible can be collected in a wide range and easily databased without regard to provider or other characteristics. By using a database constructed as described above, even when a mobile terminal device does not have GPS functionality or other location obtaining means, insofar as the mobile terminal device is capable of communication by wireless LAN, the location of the mobile terminal device can be identified by obtaining the inherent information of the access point.

### INDUSTRIAL APPLICABILITY

Since the system described above can be used to identify a location anywhere in the world, a new location information identification network can be formed by collecting the area location information of wireless LAN access points worldwide.

## Claims

1. An information collection system comprising:
a mobile terminal device having location information obtaining means for obtaining location information of a mobile terminal device, and data communication means for transmitting various types of obtained information to an information registration server; and
an information registration server provided with storage means for storing various types of information received from the mobile terminal device;
said information collection system **characterized in that**
said mobile terminal device comprises wireless LAN communication means for accessing a wireless LAN and obtaining access information of the wireless LAN;
said data communication means transmits location information of the time at which said wireless LAN was accessed that is obtained by said location information obtaining means, and access information obtained by said wireless LAN communication means to said information registration server; and
said information registration server associates and stores in said storage means the access information and the location information received from said mobile terminal device.

2. The information collection system according to claim 1, **characterized in that** said access information is an SSID (service set identifier) of an access point of the wireless LAN.

3. The information collection system according to claim 1, **characterized in that** said access information is a MAC address (media access control address) of an access point of the wireless LAN.

4. The information collection system according to claim 1, **characterized in that**
said information registration server comprises accessible area map generation means; and
said accessible area map generation means causes location information of an area in which connection to said wireless LAN is possible to be reflected in map data on the basis of the location information and access information stored in said storage means.

5. The information collection system according to claim 4, **characterized in that**
said access information includes communication protocol information; and
said accessible area map generation means changes the manner of reflection in said map data according to the type of said communication protocol.

6. The information collection system according to claim 4, **characterized in that**
said access information includes reception quality information; and
said accessible area map generation means changes the manner of reflection in said map data according to said reception quality.

7. The information collection system according to claim 4, **characterized in that**
said access information includes inherent information of an access point in an area to which said wireless LAN can be connected; and
said accessible area map generation means causes an area to which said wireless LAN can be connected that has the same inherent information to be reflected in said map data as belonging to the same area.

8. The information collection system according to any of claims 1 through 7, **characterized in that** said information registration server deletes already-stored access information when access information having the same location information as access information already stored in said storage means is not received from said mobile terminal device within a predetermined period of time.

9. The information collection system according to any of claims 1 through 7, **characterized in that** when information of a plurality of locations is associated with the same access information stored in said storage means, said information registration server computes representative location information from said plurality of location information and stores the representative location information in said storage means.

10. The information collection system according to claim 1, **characterized in that**
said information registration server comprises location identification means; and
when a query including said access information is received, said location identification means recalls location information associated with said access information from said storage means and responds.

11. The information collection system according to claim 10, **characterized in that** when information of a plurality of locations is associated with said access information, said location identification means computes representative location information from said plurality of location information and responds.

12. An information registration server comprising storage means for storing various types of information received from a mobile terminal device having location information obtaining means for obtaining location information of a mobile terminal device, wireless LAN communication means for accessing a wireless LAN and obtaining access information of the wireless LAN, and data communication means for transmitting various types of obtained information to an information registration server;
said information registration server **characterized in that**
location information of the time said wireless LAN was accessed that is obtained by said location information obtaining means and transmitted by said data communication means is associated with access information obtained by said wireless LAN communication means and stored in said storage means by said information registration server.

13. The information registration server according to claim 12, **characterized in that** when information of a plurality of locations is associated with the same access information stored in said storage means, said information registration server computes representative location information from said plurality of location information and stores the representative location information in said storage means.

14. The information registration server according to claim 12 or 13, **characterized in that**
said information registration server comprises location identification means; and
when a query including said access information is received, said location identification means recalls location information associated with said access information from said storage means and responds.

15. An information collection method in an information collection system that comprises a mobile terminal device having location information obtaining means for obtaining location information of a mobile terminal device, and data communication means for transmitting various types of obtained information to an information registration server; and
an information registration server provided with storage means for storing various types of information received from the mobile terminal device;
said information collection method **characterized in that**
said mobile terminal device comprises wireless LAN communication means for accessing a wireless LAN and obtaining access information of the wireless LAN; and
said information collection method comprises:
a first step of said data communication means transmitting location information of the time at which said wireless LAN was accessed that is obtained by said location information obtaining means, and access information obtained by said wireless LAN communication means to said information registration server; and
a second step of said information registration server associating and storing in said storage means the access information and the location information received from said mobile terminal device.

16. The information collection method according to claim 15, **characterized in** comprising a third step of said information registration server computing representative location information from said plurality of location information and storing the representative location information in said storage means when information of a plurality of locations is associated with the same access information stored in said storage means.

17. The information collection method according to claim 15 or 16, **characterized in that**
said information registration server comprises location identification means; and
said information collection method has a fourth step of said location identification means receiving a query including said access information; and a fifth step of said location identification means recalling location information associated with said access information from said storage means and responding.

18. A mobile terminal device comprising location information obtaining means for obtaining location information of a mobile terminal device, and data communication means for transmitting various types of obtained information to an information registration server;
said mobile terminal device **characterized in that**
said mobile terminal device comprises wireless LAN communication means for accessing a wireless LAN and obtaining access information of the wireless LAN; and
said data communication means transmits to said information registration server so that location information of the time said wireless LAN was accessed that is obtained by said location information obtaining means, and access information obtained by said wireless LAN communication means can be associated and stored in said information registration server.
